# EUROPEAN PATENT APPLICATION

(11) **EP 4 098 487 A1**
(43) Date of publication of application: **07.12.2022**
(21) Application number: 21195464.9
(22) Date of filing: 08.09.2021
(51) Int. Cl.: B60Q 1/38, B60Q 1/26

(54) **AUXILIARY SIDE TURN GROUND-ILLUMINATING LAMP**

(30) Priority: 31.05.2021 TW 110119704
(71) Applicant: Hiroca Automotive Trim Corporation, Taoyuan City 326 (TW)
(72) Inventor: YU, Che-Ming, 326 Taoyuan City (TW); CHUANG, Wu Chuan, 300 Hsinchu City (TW); LEE, Shuming, 302 Zhubei City (TW)
(74) Representative: Becker, Eberhard

(57) **Abstract**

An auxiliary side turn ground-illuminating lamp (100), adapted to be installed under a rearview mirror or on a side of a side skirt of an outer decorating element and adapted to be controlled by a controller (300), is provided. The auxiliary side turn ground-illuminating lamp (100) includes at least one first lens (2), at least one shading sheet (3), at least one second lens (4), and at least one light source (5) sequentially arranged along an arrangement direction. Each of the at least one light source (5) corresponds to one of the at least one first lens (2), one of the at least one shading sheet (3), and one of the at least one second lens (4) in the arrangement direction, so that the at least one shading sheet (3) is illuminated by the at least one light source (5) to project at least one pattern (400). The controller (300) is coupled to and controls the at least one light source (5) to emit light.

## Description

### BACKGROUND

### Technical Field

The disclosure relates to a vehicle lamp, and particularly relates to an auxiliary side turn ground-illuminating lamp that is presented in a waterflow manner or directly presented.

### Description of Related Art

For the auxiliary side turn signal lamp in the prior art, due to space and appearance constraints, the angle range of the light indication is relatively small (V=±15 degrees), and the light shining on the ground is not obvious.

When the vehicle is turning during driving, especially in a brighter urban environment and at a crossroad, the angle of illumination of the turn indication of the vehicle on the ground is relatively small. Especially nowadays when there are many pedestrians who are phubbers and cannot be aware of the vehicle that is about to turn immediately, an accident may occur.

### SUMMARY

The disclosure provides an auxiliary side turn ground-illuminating lamp whose image projected on the ground has a large visible range, which can effectively alleviate the issue of a relatively small illuminating angle of the indication of the auxiliary side turn signal lamp on the ground and improve the attention of pedestrians and other vehicles during driving, thereby reducing the accident rate.

An embodiment of the disclosure provides an auxiliary side turn ground-illuminating lamp adapted to be installed under a rearview mirror or on a side of a side skirt of an outer decorating element and adapted to be controlled by a controller. The auxiliary side turn ground-illuminating lamp includes at least one first lens, at least one shading sheet, at least one second lens, and at least one light source. The at least one first lens, the at least one shading sheet, the at least one second lens, and the at least one light source are sequentially arranged along an arrangement direction. Each of the at least one light source corresponds to one of the at least one first lens, one of the at least one shading sheet, and one of the at least one second lens in the arrangement direction, so that the at least one shading sheet is illuminated by the at least one light source to project at least one pattern. The controller is coupled to and controls each of the at least one light source to emit light.

Based on the above, in the embodiment of the disclosure, the auxiliary side turn ground-illuminating lamp has a reasonable structural design, which is convenient to install under the rearview mirror or on the side of the side skirt of the outer decorating element. Illuminating light thereof is projected as an arrow or a pattern on a reasonable ground position and may be presented in a waterflow manner or directly presented on the ground. Moreover, the image projected on the ground has a large visible range, which can effectively alleviate the issue of a relatively small illuminating angle of the indication of the auxiliary side turn signal lamp on the ground and improve the attention of pedestrians and other vehicles during driving, thereby reducing the accident rate.

### BRIEF DESCRIPTION OF THE DRAWINGS

In order to further understand the disclosure, the appended drawings constitute a part of the specification, are used to explain the disclosure together with the embodiment of the disclosure, and do not constitute a limitation to the disclosure.
FIG. 1 is a schematic view of an auxiliary side turn ground-illuminating lamp installed under a rearview mirror according to an embodiment of the disclosure.
FIG. 2 is an exploded view of an auxiliary side turn ground-illuminating lamp according to an embodiment of the disclosure.
FIG. 3 is a three-dimensional schematic view of an auxiliary side turn ground-illuminating lamp according to an embodiment of the disclosure.
FIG. 4 is a schematic view of multiple patterns projected by an auxiliary side turn ground-illuminating lamp according to an embodiment of the disclosure.

### DETAILED DESCRIPTION OF DISCLOSED EMBODIMENTS

In order to facilitate the understanding of the technical features, content, and advantages of the disclosure and the effects that can be achieved, the disclosure is described in detail with the embodiment and the accompanying drawings as follows. The drawings used are only for the purpose of illustration and assisting the specification, and may not be the true proportion and precise configuration after the implementation of the disclosure. Therefore, the proportion and configuration relationship of the drawings should not be interpreted as limiting the scope of the claims of the actual implementation of the disclosure.

In order for the objectives, features, and advantages of the disclosure to be more obvious and understandable, the following is a detailed description of a preferred embodiment of an auxiliary side turn ground-illuminating lamp of the disclosure in conjunction with the accompanying relevant drawings, wherein the same elements will be described with the same reference numerals.

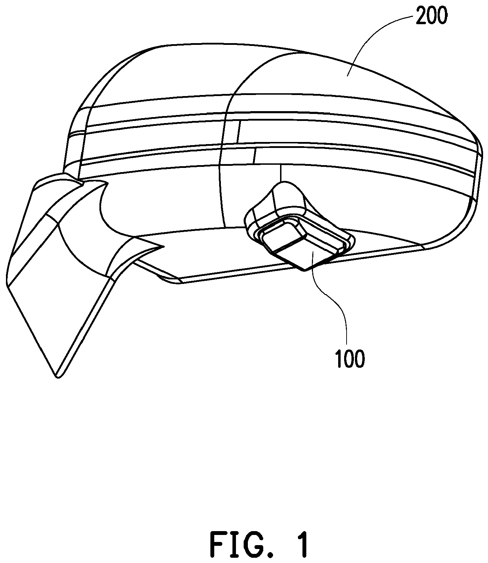

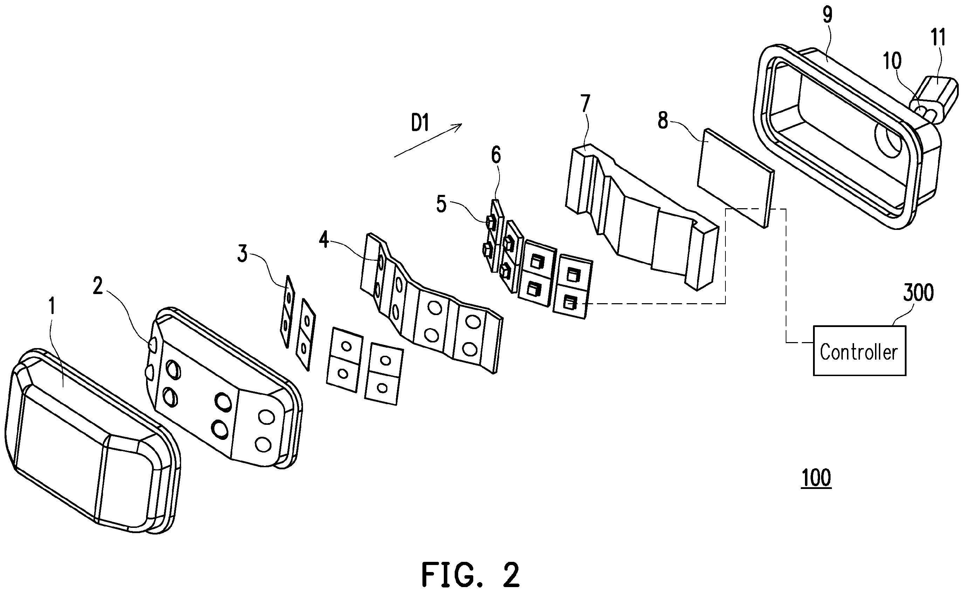

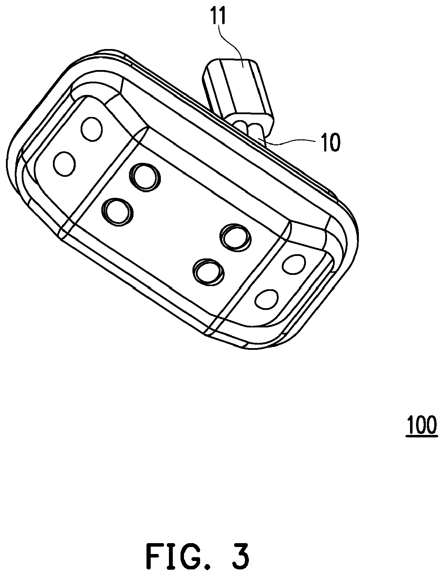

FIG. 1 is a schematic view of an auxiliary side turn ground-illuminating lamp installed under a rearview mirror according to an embodiment of the disclosure. FIG. 2 is an exploded view of an auxiliary side turn ground-illuminating lamp according to an embodiment of the disclosure. FIG. 3 is a three-dimensional schematic view of an auxiliary side turn ground-illuminating lamp according to an embodiment of the disclosure.

Please refer to FIG. 1, FIG. 2, and FIG. 3. An embodiment of the disclosure provides an auxiliary side turn ground-illuminating lamp 100 adapted to be installed under a rearview mirror 200 or on a side skirt of an outer decorating element and adapted to be controlled by a controller 300. The auxiliary side turn ground-illuminating lamp 100 includes at least one first lens 2, at least one shading sheet 3, at least one second lens 4, and at least one light source 5. The first lens 2, the shading sheet 3, the second lens 4, and the light source 5 are sequentially arranged along an arrangement direction D1. In the embodiment, the light source 5 is, for example, a light-emitting diode (LED) light source or other suitable light sources. Each of the light source 5 corresponds to one of the first lens 2, one of the shading sheet 3, and one of the second lens 4 in the arrangement direction D1. The controller 300 is coupled to and controls each of the light source 5 to emit light. Moreover, the shading sheet 3 may have a shading pattern, so that the shading sheet 3 is illuminated by the light source 5 to project at least one pattern.

In the embodiment, the controller 300 includes, for example, a microcontroller unit (MCU), a central processing unit (CPU), a microprocessor, a digital signal processor (DSP), a programmable controller, a programmable logic device (PLD), other similar devices, or a combination of the devices, which is not limited by the disclosure. In addition, in an embodiment, the functions of the controller 300 may be implemented as multiple program codes. The program codes are stored in a memory and are executed by the controller 300. Alternatively, in an embodiment, the functions of the controller 300 may be implemented as one or more circuits. The disclosure does not limit the use of software or hardware to implement the functions of the controller 300.

In the embodiment, the auxiliary side turn ground-illuminating lamp 100 further includes a lamp shade 1, at least one lamp board 6, a heat sink 7, a circuit board 8, a lamp body 9, a line set 10, and a plug 11. The lamp shade 1, the first lens 2, the shading sheet 3, the second lens 4, the light source 5, the heat sink 7, the circuit board 8, the lamp body 9, the line set 10, and the plug 11 are sequentially arranged along the arrangement direction D1, wherein the light source 5 is disposed on the lamp board 6.

In the embodiment, the lamp shade 1 and the lamp body 9 are bonded by ultrasonic or vibration welding and are sealed by using a sealant.

In the embodiment, the auxiliary side turn ground-illuminating lamp 100 further includes an air permeable nonwoven fabric disposed between the lamp body 9 and the line set 10.

In addition, the configuration manner or the work flow of the auxiliary side turn ground-illuminating lamp 100 of the embodiment of the disclosure is as follows.
1. Firstly, the light source 5 is soldered on the lamp board 6 by surface-mount technology (SMT), and all the lamp boards 6 are connected by a flexible printed circuit board (PCB).
2. The line set 10 is welded to the circuit board 8, and the circuit board 8 and the lamp board 6 are connected by welding.
3. The circuit board 8 is fixed to a bottom portion of the lamp body 9, and the heat sink 7 is placed. Then, the lamp board 6 is coated with thermal grease and fixed on the heat sink 7.
4. The shading sheet 3 is placed and fixed on the second lens 4, and the second lens 4 is then embedded into the first lens 2, as shown in FIG. 2.
5. The first lens 2 is fixed on the heat sink 7.
6. Finally, the lamp shade 1 and the lamp body 9 are bonded by ultrasonic or vibration friction welding. After installing the plug 11, the sealant is coated between the lamp body 9 and the line set 10.

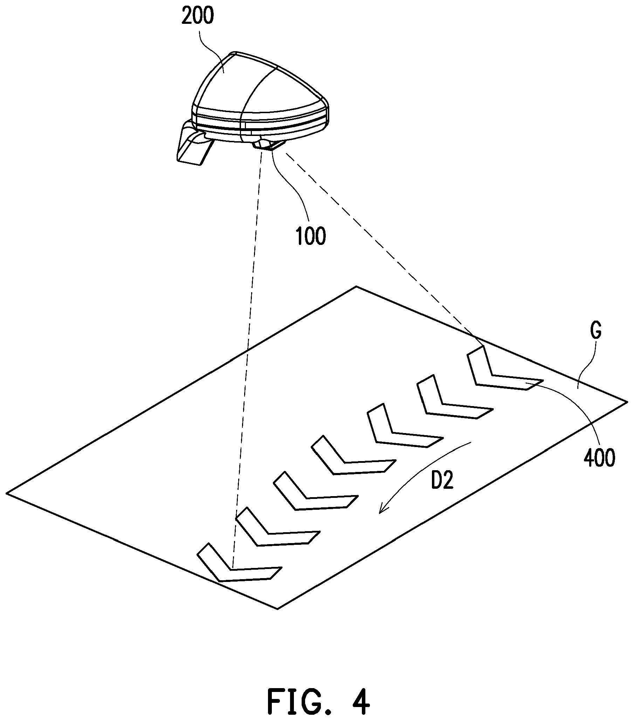

FIG. 4 is a schematic view of multiple patterns projected by an auxiliary side turn ground-illuminating lamp according to an embodiment of the disclosure. Please refer to FIG. 2 and FIG. 4 at the same time. In the embodiment, the at least one first lens 2 is multiple first lenses 2, the at least one shading sheet 3 is multiple shading sheets 3, the at least one second lens 4 is multiple second lenses 4, the at least one light source 5 is multiple light sources 5, and the at least one pattern 400 is multiple patterns 400. The controller 300 controls the light sources 5 to light up in a waterflow manner, so that the patterns 400 are presented in a waterflow manner.

For example, the pattern 400 in FIG. 4 is an arrow, but the disclosure is not limited thereto. In addition, the controller 400 controls the light source 5 to light up, so that the patterns 400 are presented on a ground G in a waterflow manner along a waterflow manner illuminating direction D2.

In the embodiment, the number of the first lens 2, the shading sheet 3, the second lens 4, or the light source 5 falls within the range of 2 to 8 sets. FIG. 2 shows that the number of each of the first lens 2, the shading sheet 3, the second lens 4, or the light source 5 is 8 sets.

In the embodiment, the manner that the controller 300 controls the light source 5 to light up includes a signal from a turn lever or receiving a button signal, a touch signal, a voice-controlled Bluetooth signal, or a gesture signal. The button signal may come from a button coupled to the controller 300, and the touch signal, the voice-controlled signal, or the gesture signal may come from a sensor coupled to the controller 300. The sensor is, for example, a touch screen that may sense touch or gesture operations, or a Bluetooth microphone or a Bluetooth speaker that may sense sound.

In summary, in an embodiment of the disclosure, the auxiliary side turn ground-illuminating lamp has a reasonable structural design, and the lamp has a small structure, which is convenient to bond with the rearview mirror or other components. The illuminating light thereof is projected as arrows or graphics on a reasonable position and is presented in a waterflow manner or directly presented on the ground. The issue of illuminating blind spot of the existing auxiliary side turn signal lamp can be improved. The warning effect of the vehicle when turning and the attention of pedestrians to the vehicle when turning can be effectively improved to ensure the safety of driving and pedestrians.

The above description is only illustrative and not restrictive. Any equivalent modifications or changes that do not depart from the spirit and scope of the disclosure should be included in the scope of the appended claims.

## Claims

1. An auxiliary side turn ground-illuminating lamp (100), adapted to be installed under a rearview mirror or on a side of a side skirt of an outer decorating element and adapted to be controlled by a controller (300), comprising: at least one first lens (2), at least one shading sheet (3), at least one second lens (4), and at least one light source (5), wherein
the at least one first lens (2), the at least one shading sheet (3), the at least one second lens (4), and the at least one light source (5) are sequentially arranged along an arrangement direction;
each of the at least one light source (5) corresponds to one of the at least one first lens (2), one of the at least one shading sheet (3), and one of the at least one second lens (4) in the arrangement direction, so that the at least one shading sheet (3) is illuminated by the at least one light source (5) to project at least one pattern (400); and
the controller (300) is coupled to and controls each of the at least one light source (5) to emit light.

2. The auxiliary side turn ground-illuminating lamp (100) according to claim 1, wherein the at least one pattern (400) is an arrow.

3. The auxiliary side turn ground-illuminating lamp (100) according to claim 1, wherein the at least one first lens (2) is a plurality of first lenses (2), the at least one shading sheet (3) is a plurality of shading sheets (3), the at least one second lens (4) is a plurality of second lenses (4), the at least one light source (5) is a plurality of light sources (5), the at least one pattern (400) is a plurality of patterns (400), and the controller (300) controls the plurality of light sources (5) to light up in a waterflow manner, so that the plurality of patterns (400) are presented in a waterflow manner.

4. The auxiliary side turn ground-illuminating lamp (100) according to claim 3, wherein a number of the plurality of first lenses (2), the plurality of shading sheets (3), the plurality of second lenses (4), or the plurality of light sources (5) falls within a range of 2 to 8 sets.

5. The auxiliary side turn ground-illuminating lamp (100) according to claim 1, wherein the controller (300) receives a button signal, a touch signal, a voice-controlled Bluetooth signal, or a gesture signal to control the at least one light source (5) to light up.

6. The auxiliary side turn ground-illuminating lamp (100) according to claim 1, further comprising: a lamp shade (1), at least one lamp board (6), a heat sink (7), a circuit board (8), a lamp body (9), a line set (10), and a plug (11), wherein
the lamp shade (1), the at least one first lens (2), the at least one shading sheet (3), the at least one second lens (4), the at least one light source (5), the heat sink (7), the circuit board (8), the lamp body (9), the line set (10), and the plug (11) are sequentially arranged along the arrangement direction; and
the at least one light source (5) is disposed on the lamp board (6).

7. The auxiliary side turn ground-illuminating lamp (100) according to claim 6, wherein the lamp shade (1) and the lamp body (9) are bonded by ultrasonic or vibration welding and are sealed by using a sealant.

8. The auxiliary side turn ground-illuminating lamp (100) according to claim 6, further comprising: an air permeable nonwoven fabric disposed between the lamp body (9) and the line set (10).
